(19)

Europäisches
Patentamt
European
Patent Office
Office européen
des brevets

(11)  **EP 4 174 094 A1**

(12)  **EUROPEAN PATENT APPLICATION**
published in accordance with Art. 153(4) EPC

(43) Date of publication:
**03.05.2023  Bulletin 2023/18**

(21) Application number: **21831807.9**

(22) Date of filing: **29.06.2021**

(51) International Patent Classification (IPC):
*C08F 8/34* $^{(2006.01)}$  *H01M 4/137* $^{(2010.01)}$
*H01M 4/1399* $^{(2010.01)}$  *H01M 4/60* $^{(2006.01)}$

(52) Cooperative Patent Classification (CPC):
**C08F 8/34; H01M 4/137; H01M 4/1399; H01M 4/60;**
**Y02E 60/10**

(86) International application number:
**PCT/JP2021/024480**

(87) International publication number:
**WO 2022/004697 (06.01.2022 Gazette 2022/01)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.06.2020  JP 2020111683**

(71) Applicant: **ADEKA CORPORATION**
**Arakawa-ku**
**Tokyo**
**116-8554 (JP)**

(72) Inventors:
• **TAKENOUCHI, Hiromi**
  **Tokyo 116-8554 (JP)**
• **YOKOMIZO, Tomofumi**
  **Tokyo 116-8554 (JP)**

(74) Representative: **Müller-Boré & Partner**
**Patentanwälte PartG mbB**
**Friedenheimer Brücke 21**
**80639 München (DE)**

(54)  **SULFUR-MODIFIED POLYACRYLONITRILE, ELECTRODE ACTIVE MATERIAL CONTAINING SAME, SECONDARY BATTERY ELECTRODE CONTAINING SAID ELECTRODE ACTIVE MATERIAL, METHOD FOR PRODUCING SAID ELECTRODE, AND NONAQUEOUS ELECTROLYTE SECONDARY BATTERY THAT USES SAID ELECTRODE**

(57)  The present invention provides a sulfur-modified polyacrylonitrile, which has a total content of sulfur of from 30 mass% to 55 mass%, and has a value for the calculation formula (1) defined in Description of less than 0.08, an electrode active material containing the same, an electrode for a secondary battery including the electrode active material, a method of manufacturing the electrode, and a non-aqueous electrolyte secondary battery using the electrode.

EP 4 174 094 A1

**Description**

Technical Field

The present invention relates to a sulfur-modified polyacrylonitrile, an electrode active material containing the same, an electrode for a secondary battery comprising the electrode active material, a method of manufacturing the electrode, and a non-aqueous electrolyte secondary battery using the electrode.

Background Art

A non-aqueous electrolyte secondary battery such as a lithium ion secondary battery is compact and lightweight, has a high energy density, and can be charged and discharged repeatedly, and hence has been widely used as a power source for a portable electronic device, such as a portable personal computer, a handy video camera, or an information terminal. In addition, an electric vehicle using the non-aqueous electrolyte secondary battery, and a hybrid car utilizing electric power in part of its motive power have been put into practical use in view of environmental problems. Accordingly, in recent years, it has been required that the performance of the secondary battery be further improved.

The characteristics of the non-aqueous electrolyte secondary battery depend on an electrode, a separator, an electrolyte, and the like serving as constituent members of the battery, and research and development have been actively made on the respective constituent members. In the electrode, an electrode active material is important as well as a binder, a current collector material, and the like, and research and development have been actively made on the electrode active material.

A sulfur-modified polyacrylonitrile, which is obtained by subjecting a mixture of polyacrylonitrile and sulfur to heat treatment under a non-oxidizing atmosphere, is known as an electrode active material which has a high charge-discharge capacity and in which the charge-discharge capacity is less reduced along with repetition of charging and discharging (hereinafter sometimes referred to as "cycle characteristics") (see, for example, Patent Documents 1 to 3). The sulfur-modified polyacrylonitrile has been investigated mainly as an electrode active material of a positive electrode, but has also been investigated as an electrode active material of a negative electrode (see, for example, Patent Document 3).

Meanwhile, thermal desorption mass spectrometry is an analysis method involving heating a sample in an ultrahigh vacuum and analyzing a desorbed gas component with a mass spectrometer, and enables quantitative determination of the gas component based on m/z specific to a fragment ion of the gas component. Also in the field of a battery electrode, the thermal desorption mass spectrometry is applied to analysis of a volatile organic group of a positive electrode material (see, for example, Patent Document 4), analysis of a gas caused by oxygen desorption from a composite oxide of lithium and a transition metal (see, for example, Patent Document 5), and the like, but no example is known of its application to a sulfur-based electrode active material.

Citation List

Patent Document

[Patent Document 1] WO 2010/044437 A1
[Patent Document 2] JP 2014-022123 A
[Patent Document 3] JP 2014-096327 A
[Patent Document 4] WO 2011/062019 A1
[Patent Document 5] JP 2019-114454 A

Summary of Invention

Technical Problem

It has been required that the battery characteristics of the non-aqueous electrolyte secondary battery be further improved, and it has also been required that the electrode active material have higher performance. When the secondary battery is stored in a charged state for a long period of time, the quantity of electricity accumulated is reduced through self-discharge. In particular, the self-discharge is liable to occur at high temperature. The sulfur-modified polyacrylonitrile is known as an electrode active material enabling obtainment of a non-aqueous electrolyte secondary battery that has less self-discharge at normal temperature and is excellent in electric power storage characteristics, but the electric power storage characteristics are insufficient at high temperature.

Solution to Problem

The inventors of the present invention made extensive investigations, and as a result, found that an electrode having excellent electric power storage characteristics even at high temperature is obtained, through use of the results obtained by analyzing a sulfur-modified polyacrylonitrile by thermal desorption mass spectrometry. Thus, the present invention has been completed.

That is, according to one embodiment of the present invention, there is provided a sulfur-modified polyacrylonitrile, which has a total content of sulfur of from 30 mass% to 55 mass%, and has a value for the following calculation formula (1) of less than 0.08.

<Calculation Formula (1)>

$$E1/(E1+E2+E3) \qquad (1)$$

where E1, E2, and E3 are each represented by a value for $F_{32}+2F_{64}$, $F_{32}$ and $F_{64}$ represent fragment ion intensities at m/z=32 and m/z=64, which are obtained when the sulfur-modified polyacrylonitrile is subjected to thermal desorption mass spectrometry based on an electron ionization method at a temperature increase rate of 60°C/min in a measurement temperature range of from 55°C to 1,000°C, respectively, and E1 represents a value for $F_{32}+2F_{64}$ in a measurement temperature range of 55°C or more and less than 270°C, E2 represents a value for $F_{32}+2F_{64}$ in a measurement temperature range of 270°C or more and less than 570°C, and E3 represents a value for $F_{32}+2F_{64}$ in a measurement temperature range of 570°C or more and 1,000°C or less.

Advantageous Effects of Invention

According to the present invention, the sulfur-modified polyacrylonitrile useful as an electrode active material for a non-aqueous electrolyte secondary battery having a high charge-discharge capacity and excellent electric power storage characteristics even at high temperature can be provided.

Brief Description of Drawings

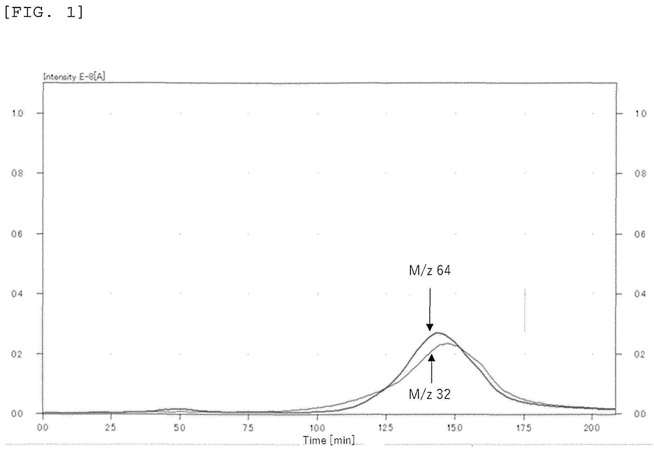

FIG. 1 is a chart showing the results obtained by subjecting SPAN 7 (Example 5) to thermal desorption mass spectrometry based on an electron ionization method.

Description of Embodiments

In the present invention, a sulfur-modified polyacrylonitrile is a compound obtained by subjecting polyacrylonitrile and elemental sulfur to heat treatment in a non-oxidizing atmosphere. Polyacrylonitrile may be a homopolymer of acrylonitrile, or may be a copolymer of acrylonitrile and another monomer. In the case where polyacrylonitrile is the copolymer, battery performance is reduced when the content of acrylonitrile is reduced. Accordingly, the content of acrylonitrile in the copolymer is preferably at least 90 mass% or more. Examples of the other monomer include acrylic acid, vinyl acetate, N-vinyl formamide, and N,N'-methylenebis(acrylamide).

The sulfur-modified polyacrylonitrile of the present invention has a total content of sulfur of from 30 mass% to 55 mass%. When the total content of sulfur is less than 30 mass%, a high charge-discharge capacity may not be obtained, and when the total content of sulfur is more than 55 mass%, excellent cycle characteristics may not be obtained. The total content of sulfur in the sulfur-modified polyacrylonitrile of the present invention is preferably from 33 mass% to 45 mass%, more preferably from 35 mass% to 43 mass%. The content of sulfur in the sulfur-modified polyacrylonitrile may be calculated from analysis results using a CHN analyzer capable of analyzing sulfur and oxygen.

The sulfur-modified polyacrylonitrile of the present invention has the feature of being a sulfur-modified polyacrylonitrile having a value for the calculation formula (1): E1/(E1+E2+E3) of less than 0.08 where E1, E2, and E3 are each represented by a value for $F_{32}+2F_{64}$, $F_{32}$ and $F_{64}$ represent fragment ion intensities at m/z=32 and m/z=64, which are obtained when the sulfur-modified polyacrylonitrile is measured by thermal desorption mass spectrometry based on an electron ionization method at a temperature increase rate of 60°C/min in the measurement temperature range of from 55°C to 1,000°C, respectively, and E1 represents a value for $F_{32}+2F_{64}$ in the range of 55°C or more and less than 270°C, E2 represents a value for $F_{32}+2F_{64}$ in the range of 270°C or more and less than 570°C, and E3 represents a value for $F_{32}+2F_{64}$ in the range of 570°C or more and 1,000°C or less.

In the present invention, the measurement temperature range of the thermal desorption mass spectrometry is set to from 55°C to 1,000°C. With this configuration, not only free sulfur and thermally unstable polysulfide-bound sulfur in the sulfur-modified polyacrylonitrile, but a large part of sulfur in the sulfur-modified polyacrylonitrile can be freed into a gasified form and analyzed. In the thermal desorption mass spectrometry, when the temperature increase rate is too high, large variations in measurement value may occur, and when the temperature increase rate is too low, a clear peak may not be observed. Accordingly, the temperature increase rate of the thermal desorption mass spectrometry in the present invention is set to 60°C/min. Sulfur still remains in a measurement sample at the stage when the temperature reaches 1,000°C. For this reason, the temperature is kept at 1,000°C after the temperature reaches 1,000°C and the measurement is continued for 5 minutes after the temperature reaches 1,000°C.

In the thermal desorption mass spectrometry, when the amount of the sample to be used for the measurement is too large, contamination of a device is increased, and hence it is preferred that the amount of the sample be small. However, when the amount of the sample is too small, large variations occur, and hence the sampling amount of the sulfur-modified polyacrylonitrile in the thermal desorption mass spectrometry of the present invention is preferably from 30 ng to 80 ng. In addition, when the particle diameter of the sulfur-modified polyacrylonitrile is too large, release of a gas from the inside of particles may be insufficient, and hence the sulfur-modified polyacrylonitrile to be used for the measurement preferably has an average particle diameter of 30 pm or less. In the present invention, a 50% particle diameter measured by a laser diffraction light scattering method is used as the average particle diameter. In the laser diffraction light scattering method, the particle diameter is a diameter on a volume basis, and the secondary particle diameters of measurement particles are measured.

An ionization method of the thermal desorption mass spectrometry in the present invention is an electron ionization method. In the electron ionization method, a gas desorbed from the measurement sample is more easily fragmented with a low mass than in other ionization methods, and when the measurement sample is the sulfur-modified polyacrylonitrile, a fragment ion at m/z=32 derived from $S^+$ and a fragment ion at m/z=64 derived from $S^{2+}$ are stably obtained. In the present invention, a fragment ion intensity at m/z=32 and a fragment ion intensity at m/z=64 are represented by $F_{32}$ and $F_{64}$, respectively, and not the total of $F_{32}$ and $F_{64}$ but $F_{32}+2F_{64}$ is used as an indicator in consideration of the masses of the fragment ions.

It is required that the sulfur-modified polyacrylonitrile of the present invention have a value for the calculation formula (1): E1/(E1+E2+E3) of less than 0.08. When the value for the calculation formula (1): E1/(E1+E2+E3) is 0.08 or more, excellent cycle characteristics may not be obtained. The value for the calculation formula (1): E1/(E1+E2+E3) is preferably less than 0.05, more preferably less than 0.03, most preferably less than 0.02.

It is preferred that the value for the calculation formula (1): E1/(E1+E2+E3) be smaller. However, it requires great labor to achieve a value for the calculation formula (1): E1/(E1+E2+E3) of less than 0.0005, and hence the value for the calculation formula (1): E1/(E1+E2+E3) is preferably 0.0005 or more.

It is preferred that the sulfur-modified polyacrylonitrile of the present invention further have a value for the calculation formula (2): E2/(E1+E2+E3) of less than 0.29 because excellent electric power storage characteristics at high temperature are obtained. The residual capacity of a battery after charging is reduced due to self-discharge, and the self-discharge is increased more under higher temperature conditions. In the present invention, the electric power storage characteristics at high temperature refer to the characteristics in which a reduction in residual capacity of a charged battery due to self-discharge under the high temperature conditions is suppressed. The value for the calculation formula (2): E2/(E1+E2+E3) is preferably less than 0.26, more preferably less than 0.23. It requires great labor to reduce the value for the calculation formula (2): E2/(E1+E2+E3), and an improving effect on the electric power storage characteristics at high temperature corresponding to the labor is saturated. Accordingly, the value for the calculation formula (2): E2/(E1+E2+E3) is preferably more than 0.01.

The sulfur-modified polyacrylonitrile of the present invention is obtained by a manufacturing method involving a heat treatment step of subjecting polyacrylonitrile and elemental sulfur to heat treatment. The blending ratio between polyacrylonitrile and elemental sulfur is preferably from 100 parts by mass to 1,500 parts by mass of elemental sulfur with respect to 100 parts by mass of polyacrylonitrile. The temperature of the heat treatment is preferably from 250°C to 550°C. The heat treatment is preferably performed under a non-oxidizing atmosphere. Polyacrylonitrile and elemental sulfur are each preferably formed of powder because uniform modification with sulfur is achieved. When the particle diameters of polyacrylonitrile and elemental sulfur are too small, it requires great labor to reduce polyacrylonitrile and elemental sulfur to fine particle diameters. When the particle diameters of polyacrylonitrile and elemental sulfur are too large, modification with sulfur becomes insufficient. Accordingly, the particle diameters of polyacrylonitrile and elemental sulfur are each preferably from 1 um to 1,000 um in terms of an average particle diameter.

The sulfur-modified polyacrylonitrile obtained by the heat treatment contains sulfur that is easily desorbable by heating, and hence the sulfur-modified polyacrylonitrile obtained by the heat treatment may be heated to remove easy desorbable sulfur in order to reduce the value for E1/(E1+E2+E3). However, when a heating temperature is too low, the heating requires a long time, and when the heating temperature is too high, the removal of desorbed sulfur involves a high cost. Accordingly, it is preferred to remove sulfur in combination of the heating with pressure reduction. The heating temperature is preferably from 260°C to 600°C, more preferably from 300°C to 550°C, still more preferably from 350°C to 500°C. A pressure in the case of performing the pressure reduction is preferably 100 hPa or less, more preferably 50 hPa or less, most preferably 25 hPa or less. A time required for the removal of sulfur varies depending on the heating temperature and the pressure in the case of performing the pressure reduction. For example, it is preferred to perform the pressure reduction at a pressure of 20 hPa for 10 hours or more in the case of 260°C, at a pressure of 20 hPa for 1 hour or more in the case of 300°C, or at a pressure of 20 hPa for from 0.5 hour to 15 hours in the case of 350°C.

The sulfur-modified polyacrylonitrile of the present invention preferably has a particle diameter of from 0.1 $\mu$m to 50 $\mu$m in terms of an average particle diameter. The particle diameter is a diameter on a volume basis, and the diameters of secondary particles are measured by a laser diffraction light scattering method. In the present invention, the "average particle diameter" refers to a 50% particle diameter (D50) measured by a laser diffraction light scattering method. It requires great labor to reduce the average particle diameter of the sulfur-modified polyacrylonitrile to less than 0.1 $\mu$m, but a further improvement in battery performance cannot be expected. When the average particle diameter of the sulfur-modified polyacrylonitrile is more than 50 $\mu$m, peeling or the like of an electrode mixture layer may be liable to occur. The sulfur-modified polyacrylonitrile of the present invention has an average particle diameter of more preferably from 0.5 um to 30 $\mu$m, still more preferably from 1 $\mu$m to 20 $\mu$m.

The sulfur-modified polyacrylonitrile of the present invention has a high charge-discharge capacity and excellent cycle characteristics as an electrode active material, and hence can be suitably used as an electrode active material of an electrode for a non-aqueous electrolyte secondary battery. Specifically, the sulfur-modified polyacrylonitrile of the present invention is provided on a current collector to form an electrode mixture layer containing the sulfur-modified polyacrylonitrile. The electrode mixture layer is formed by applying a slurry prepared by adding the sulfur-modified polyacrylonitrile of the present invention, a binder, and a conductive assistant to a solvent onto the current collector, followed by drying.

The sulfur-modified polyacrylonitrile of the present invention may be used, as an electrode active material, alone or in combination with another sulfur-based active material. Examples of the other sulfur-based active material include an organic polysulfide (R-S-S$_m$-R: R represents a hydrocarbon group, m=1 to 50), and a carbon-sulfur polymer ($(C_2S_x)_y$: x=2.5 to 50, y$\geq$2).

A binder known as a binder for an electrode may be used as the binder. Examples thereof include a styrene-butadiene rubber, a butadiene rubber, polyethylene, polypropylene, polyamide, polyamide imide, polyimide, polyacrylonitrile, polyurethane, polyvinylidene fluoride, polytetrafluoroethylene, an ethylene-propylene-diene rubber, a fluorine rubber, a styrene-acrylic acid ester copolymer, an ethylene-vinyl alcohol copolymer, an acrylonitrile butadiene rubber, a styrene-isoprene rubber, polymethyl methacrylate, polyacrylate, polyvinyl alcohol, polyvinyl ether, carboxymethyl cellulose, sodium carboxymethyl cellulose, methyl cellulose, a cellulose nanofiber, polyethylene oxide, starch, polyvinylpyrrolidone, polyvinyl chloride, and polyacrylic acid.

As the binder, an aqueous binder is preferred because of its low environmental load and excellent binding property, and a styrene-butadiene rubber, sodium carboxymethyl cellulose, and polyacrylic acid are particularly preferred. Those binders may be used alone or in combination thereof.

The content of the binder in the slurry is preferably from 1 part by mass to 30 parts by mass, more preferably from 1 part by mass to 20 parts by mass with respect to 100 parts by mass of the sulfur-modified polyacrylonitrile of the present invention.

A conductive assistant known as conductive assistant for an electrode may be used as the conductive assistant, and specific examples thereof include: carbon materials, such as natural graphite, artificial graphite, carbon black, ketjen black, acetylene black, channel black, furnace black, lamp black, thermal black, a carbon nanotube, a vapor grown carbon fiber (VGCF), graphene, fullerene, and needle coke; metal powders, such as aluminum powder, nickel powder, and titanium powder; conductive metal oxides, such as zinc oxide and titanium oxide; and sulfides, such as La$_2$S$_3$, Sm$_2$S$_3$, Ce$_2$S$_3$, and TiS$_2$. The average particle diameter of the conductive assistant is preferably from 0.0001 um to 100 $\mu$m, more preferably from 0.01 $\mu$m to 50 $\mu$m.

The content of the conductive assistant in the slurry is generally from 0.1 part by mass to 50 parts by mass, preferably from 1 part by mass to 30 parts by mass, more preferably from 2 parts by mass to 20 parts by mass with respect to 100 parts by mass of the sulfur-modified polyacrylonitrile of the present invention.

Examples of the solvent for preparing the slurry include propylene carbonate, ethylene carbonate, diethyl carbonate, dimethyl carbonate, ethylmethyl carbonate, 1,2-dimethoxyethane, 1,2-diethoxyethane, acetonitrile, propionitrile, tetrahydrofuran, 2-methyltetrahydrofuran, dioxane, 1,3-dioxolane, nitromethane, N-methylpyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, dimethyl sulfoxide, sulfolane, $\gamma$-butyrolactone, water, and an alcohol. The usage amount of the solvent may be adjusted in accordance with a method of applying the slurry. For example, in the case of a doctor blade method, the usage amount of the solvent is preferably from 20 parts by mass to 300 parts by mass, more preferably from 30 parts by mass to 200 parts by mass with respect to 100 parts by mass of a total amount of the sulfur-modified polyacrylonitrile, the binder, and the conductive assistant.

The slurry may contain another component in addition to the above-mentioned components. Examples of the other component include a viscosity modifier, a reinforcing material, and an antioxidant.

A method of preparing the slurry is not particularly limited, but may be, for example, a method involving using an ordinary ball mill, a sand mill, a bead mill, a pigment disperser, a mortar machine, an ultrasonic disperser, a homogenizer, a rotation/revolution mixer, a planetary mixer, Fill Mix, or Jet Paster.

A conductive material, such as titanium, a titanium alloy, aluminum, an aluminum alloy, copper, nickel, stainless steel, or nickel-plated steel, is used as the current collector. The surfaces of those conductive materials may each be coated with carbon. The current collector has a foil shape, a sheet shape, a mesh shape, or the like. Of those options, aluminum is preferred from the viewpoints of conductivity and cost, and a foil shape is preferred out of the shapes. In the case of a foil shape, a foil thickness is generally from 1 um to 100 $\mu$m.

The method of applying the slurry onto the current collector is not particularly limited, and various methods, such as a die coater method, a comma coater method, a curtain coater method, a spray coater method, a gravure coater method, a flexo coater method, a knife coater method, a doctor blade method, a reverse roll method, a brush coating method, and a dip method, may be used. Of those, a die coater method, a doctor blade method, and a knife coater method are preferred because these methods can each be adjusted to the physical properties such as a viscosity and the drying property of the slurry to obtain an application layer with a satisfactory surface state.

The slurry may be applied onto only one surface or both surfaces of the current collector. When the slurry is applied onto both surfaces of the current collector, the slurry may be applied sequentially onto one surface at a time, or may be applied simultaneously onto both surfaces at a time. In addition, the slurry may be applied onto the surface of the current collector continuously or intermittently, or may be applied thereonto in a stripe pattern. The thickness, the length, and the width of the application layer may be appropriately determined depending on the size of a battery.

A method of drying the slurry having been applied onto the current collector is not particularly limited, and various methods, such as drying with warm air, hot air, or low-humidity air, vacuum drying, still standing in a heating furnace or the like, irradiation with far infrared rays, infrared rays, electron beams, or the like, may each be used. With the drying, a volatile component such as the solvent volatilizes from the application film of the slurry, and thus the electrode mixture layer is formed on the current collector. After that, the electrode may be subjected to press processing as required. Examples of the method for the press processing include a mold press method and a roll press method.

An electrode of the present invention has the same configuration as a known electrode. Specifically, the electrode of the present invention comprises a current collector, and an electrode mixture layer formed on the current collector. Moreover, the electrode mixture layer contains the sulfur-modified polyacrylonitrile of the present invention.

The electrode of the present invention can be used for, without particular limitations, a non-aqueous secondary battery comprising a non-aqueous electrolyte. The non-aqueous electrolyte may be any one of a liquid electrolyte, a gel electrolyte, a solid electrolyte, and the like. The electrode of the present invention can be more suitably used for a lithium ion secondary battery. The electrode of the present invention can be used as a positive electrode or a negative electrode.

In general, the non-aqueous electrolyte secondary battery comprises a positive electrode, a negative electrode, a non-aqueous electrolyte, and a separator. When the electrode of the present invention is used as the positive electrode, an electrode comprising a known negative electrode active material may be used as the negative electrode. When the electrode of the present invention is used as the negative electrode, an electrode comprising a known positive electrode active material may be used as the positive electrode. A negative electrode in the case of using the electrode of the present invention as the positive electrode, and a positive electrode in the case of using the electrode of the present invention as the negative electrode are each referred to as "counter electrode".

Examples of the known negative electrode active material include natural graphite, artificial graphite, non-graphitizable carbon, graphitizable carbon, lithium, a lithium alloy, silicon, a silicon alloy, silicon oxide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide, and as well, composite oxides, such as $LiVO_2$, $Li_2VO_4$, and $Li_4Ti_5O_{12}$. Those negative electrode active materials may be used alone or in combination thereof.

Examples of the known positive electrode active material include a composite oxide of lithium and a transition metal, a lithium-containing transition metal phosphate compound, and a lithium-containing silicate compound.

A transition metal in the composite oxide of lithium and a transition metal is preferably, for example, vanadium, titanium, chromium, manganese, iron, cobalt, nickel, or copper. Specific examples of the composite oxide of lithium and a transition metal include: composite oxides of lithium and cobalt such as $LiCoO_2$; composite oxides of lithium and nickel such as $LiNiO_2$; composite oxides of lithium and manganese, such as $LiMnO_2$, $LiMn_2O_4$, and $Li_2MnO_3$; and compounds obtained by partially substituting primary transition metal atoms of these composite oxides of lithium and transition metals with another metal, such as aluminum, titanium, vanadium, chromium, manganese, iron, cobalt, lithium, nickel, copper, zinc, magnesium, gallium, or zirconium. Specific examples of the composite oxides of lithium and transition metals having

6

primary transition metal atoms partially substituted with another metal include $Li_{1.1}Mn_{1.8}Mg_{0.1}O_4$, $Li_{1.1}Mn_{1.85}Al_{0.05}O_4$ $LiNi_{0.5}Co_{0.2}Mn_{0.3}O_2$, $LiNi_{0.8}Co_{0.1}Mn_{0.1}O_2$ $LiNi_{0.5}Mn_{0.5}O_2$, $LiNi_{0.80}Co_{0.17}Al_{0.03}O_2$, $LiNi_{0.80}Co_{0.15}Al_{0.05}O_2$, $Li(Ni_{1/3}Co_{1/3}Mn_{1/3})O_2$, $LiNi_{0.6}Co_{0.2}Mn_{0.2}O_2$, $LiMn_{1.8}Al_{0.2}O_4$, $LiNi_{0.5}Mn_{1.5}O_4$, and $Li_2MnO_3$-$LiMO_2$ (M=Co, Ni, or Mn) .

A transition metal in the lithium-containing transition metal phosphate compound is preferably vanadium, titanium, manganese, iron, cobalt, nickel, or the like, and specific examples of the compound include: iron phosphate compounds, such as $LiFePO_4$ and $LiMn_xFe_{1-x}PO_4$ (0<x<1); iron sulfate compounds such as $LiFeSO_4F$; cobalt phosphate compounds such as $LiCoPO_4$; compounds obtained by partially substituting primary transition metal atoms of these lithium-containing transition metal phosphate compounds with another metal, such as aluminum, titanium, vanadium, chromium, manganese, iron, cobalt, lithium, nickel, copper, zinc, magnesium, gallium, zirconium, or niobium; and vanadium phosphate compounds such as $Li_3V_2(PO_4)_3$.

An example of the lithium-containing silicate compound is $Li_2FeSiO_4$. Those positive electrode active materials may be used alone or in combination thereof.

The counter electrode may be produced by replacing the above-mentioned sulfur-modified polyacrylonitrile of the present invention with the above-mentioned known negative electrode active material or known positive electrode active material.

Examples of the non-aqueous electrolyte include: a liquid electrolyte obtained by dissolving a supporting electrolyte in an organic solvent; a gel polymer electrolyte in which a supporting electrolyte is dissolved in an organic solvent and gelation is performed with a polymer; a pure polymer electrolyte which is free of an organic solvent and in which a supporting electrolyte is dispersed in a polymer; and an inorganic solid electrolyte.

For example, a hitherto known lithium salt is used as the supporting electrolyte to be used in the liquid electrolyte and the gel polymer electrolyte. Examples thereof include $LiPF_6$, $LiBF_4$, $LiAsF_6$, $LiCF_3SO_3$, $LiCF_3CO_2$, $LiN(CF_3SO_2)_2$, $LiN(C_2F_5SO_2)_2$, $LiN(SO_2F)_2$, $LiC(CF_3SO_2)_3$, $LiB(CF_3SO_3)_4$, $LiB(C_2O_4)_2$, $LiBF_2(C_2O_4)$, $LiSbF_6$, $LiSiF_5$, LiSCN, $LiClO_4$, LiCl, LiF, LiBr, LiI, $LiAlF_4$, $LiAlCl_4$, $LiPO_2F_2$, and derivatives thereof. Of those, one or more kinds selected from the group consisting of: $LiPF_6$; $LiBF_4$; $LiClO_4$; $LiAsF_6$; $LiCF_3SO_3$; $LiN(CF_3SO_2)_2$; $LiN(C_2F_5SO_2)_2$; $LiN(SO_2F)_2$; $LiC(CF_3SO_2)_3$; derivatives of $LiCF_3SO_3$; and derivatives of $LiC(CF_3SO_2)_3$ are preferably used.

The content of the supporting electrolyte in the liquid electrolyte or the gel polymer electrolyte is preferably from 0.5 mol/L to 7 mol/L, more preferably from 0.8 mol/L to 1.8 mol/L.

Examples of the supporting electrolyte to be used in the pure polymer electrolyte include $LiN(CF_3SO_2)_2$, $LiN(C_2F_5SO_2)_2$, $LiN(SO_2F)_2$, $LiC(CF_3SO_2)_3$, $LiB(CF_3SO_3)_4$, and $LiB(C_2O_4)_2$.

Examples of the inorganic solid electrolyte include: phosphoric acid-based materials, such as $Li_{1+x}A_xB_{2-y}(PO_4)_3$ (A=Al, Ge, Sn, Hf, Zr, Sc, or Y, B=Ti, Ge, or Zn, 0<x<0.5), $LiMPO_4$ (M=Mn, Fe, Co, or Ni), and $Li_3PO_4$; composite oxides of lithium, such as $Li_3XO_4$ (X=As or V), $Li_{3+x}A_xB_{1-x}O_4$ (A=Si, Ge, or Ti, B=P, As, or V, 0<x<0.6), $Li_{4+x}A_xSi_{1-x}O_4$ (A=B, Al, Ga, Cr, or Fe, 0<x<0.4) (A=Ni or Co, 0<x<0.1), $Li_{4-3y}Al_ySiO_4$ (0<y<0.06), $Li_{4-2y}Zn_yGeO_4$ (0<y<0.25), $LiAlO_2$, $Li_2BO_4$, $Li_4XO_4$ (X=Si, Ge, or Ti), and lithium titanate ($LiTiO_2$, $LiTi_2O_4$, $Li_4TiO_4$, $Li_2TiO_3$, $Li_2Ti_3O_7$, or $Li_4Ti_3O_{12}$); compounds each containing lithium and a halogen atom, such as LiBr, LiF, LiCl, $LiPF_6$, and $LiBF_4$; compounds each containing lithium and a nitrogen atom, such as LiPON, $LiN(SO_2CF_3)_2$, $LiN(SO_2C_2F_5)_2$, $Li_3N$, and $LiN(SO_2C_3F_7)_2$; crystals each having a perovskite structure having lithium ion conductivity such as $La_{0.55}Li_{0.35}TiO_3$; crystals each having a garnet-type structure such as $Li_7$-$La_3Zr_2O_{13}$; glasses such as $50Li_4SiO_4 \cdot 50Li_3BO_3$; lithium-phosphorus sulfide-based crystals, such as $Li_{10}GeP_2S_{12}$ and $Li_{3.25}Ge_{0.25}P_{0.75}S_4$; lithium-phosphorus sulfide-based glasses, such as $30Li_2S \cdot 26B_2S_3 \cdot 44LiI$, $63Li_2S \cdot 36SiS_2 \cdot 1Li_3PO_4$, $57Li_2S \cdot 38SiS_2 \cdot 5Li_4SiO_4$, $70Li_2S \cdot 50GeS_2$, and $50Li_2S \cdot 50GeS_2$; and glass ceramics, such as $Li_7P_3S_{11}$ and $Li_{3.25}P_{0.95}S_4$.

As the organic solvent to be used for preparation of the liquid non-aqueous electrolyte to be used in the present invention, organic solvents generally used for the liquid non-aqueous electrolyte may be used alone or in combination thereof. Specific examples thereof include a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound.

Of those organic solvents, the saturated cyclic carbonate compound, the saturated cyclic ester compound, the sulfoxide compound, the sulfone compound, and the amide compound each play a role in increasing the dielectric constant of the non-aqueous electrolyte by virtue of having a high specific dielectric constant, and the saturated cyclic carbonate compound is particularly preferred.

Examples of the saturated cyclic carbonate compound include ethylene carbonate, 1,2-propylene carbonate, 1,3-propylene carbonate, 1,2-butylene carbonate, 1,3-butylene carbonate, and 1,1-dimethylethylene carbonate.

Examples of the saturated cyclic ester compound include γ-butyrolactone, γ-valerolactone, γ-caprolactone, δ-hexanolactone, and δ-octanolactone. Examples of the sulfoxide compound include dimethyl sulfoxide, diethyl sulfoxide, dipropyl sulfoxide, diphenyl sulfoxide, and thiophene.

Examples of the sulfone compound include dimethylsulfone, diethylsulfone, dipropylsulfone, diphenylsulfone, sulfolane (also referred as tetramethylene sulfone), 3-methylsulfolane, 3,4-dimethylsulfolane, 3,4-diphenylsulfolane, sulfolene, 3-methylsulfolene, 3-ethylsulfolene, and 3-bromomethylsulfolene. Of those, sulfolane and tetramethylsulfolane are preferred.

Examples of the amide compound include N-methylpyrrolidone, dimethylformamide, and dimethylacetamide.

Of the above-mentioned organic solvents, the saturated chain carbonate compound, the chain ether compound, the cyclic ether compound, and the saturated chain ester compound can each make battery characteristics such as an output density excellent by virtue of having the capability of reducing the viscosity of the non-aqueous electrolyte, the capability of increasing the mobility of an electrolyte ion, and the like. In addition, each of the compounds has a low viscosity, and hence can improve the performance of the non-aqueous electrolyte at low temperature, and the saturated chain carbonate compound is particularly preferred.

Examples of the saturated chain carbonate compound include dimethyl carbonate, ethyl methyl carbonate, diethyl carbonate, ethyl butyl carbonate, methyl-t-butyl carbonate, diisopropyl carbonate, and t-butyl propyl carbonate.

Examples of the chain ether compound or the cyclic ether compound include dimethoxyethane, ethoxymethoxyethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl) ether, propylene glycol bis(trifluoroethyl) ether, ethylene glycol bis(trifluoromethyl) ether, and diethylene glycol bis(trifluoroethyl) ether. Of those, dioxolane is preferred.

The saturated chain ester compound is preferably a monoester compound or a diester compound having 2 to 8 carbon atoms in total in a molecule thereof. Specific examples of the compound include methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl. Of those, methyl formate, ethyl formate, methyl acetate, ethyl acetate, propyl acetate, isobutyl acetate, butyl acetate, methyl propionate, and ethyl propionate are preferred.

Other than the foregoing, for example, acetonitrile, propionitrile, nitromethane, derivatives thereof, and various ionic liquids may each also be used as the organic solvent used for preparation of the non-aqueous electrolyte.

Examples of the polymer to be used in the gel polymer electrolyte include polyethylene oxide, polypropylene oxide, polyvinyl chloride, polyacrylonitrile, polymethyl methacrylate, polyethylene, polyvinylidene fluoride, and polyhexafluoropropylene. Examples of the polymer to be used in the pure polymer electrolyte include polyethylene oxide, polypropylene oxide, and polystyrenesulfonic acid. The blending ratio in the gel electrolyte and a compositing method are not particularly limited, and a known blending ratio and a known compositing method in the technical field may be adopted.

In order to prolong the lifetime of the battery and improve the safety thereof, the non-aqueous electrolyte may contain a known other additive, such as an electrode film forming agent, an antioxidant, a flame retardant, or an overcharge inhibitor. When the other additive is used, the amount of the other additive is generally from 0.01 part by mass to 10 parts by mass, preferably from 0.1 part by mass to 5 parts by mass with respect to 100 parts by mass of the entirety of the non-aqueous electrolyte.

A microporous polymer film generally used for the non-aqueous electrolyte secondary battery may be used as the separator without particular limitations. Examples of the film include films formed of polymer compounds containing, as main components, for example, any of polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, polyimide, polyethers, such as polyethylene oxide and polypropylene oxide, various celluloses, such as carboxymethyl cellulose and hydroxypropyl cellulose, and poly(meth)acrylic acid and various esters thereof, derivatives thereof, copolymers thereof, and mixtures thereof. Those films may each be coated with a ceramic material, such as alumina or silica, magnesium oxide, an aramid resin, or polyvinylidene fluoride.

Those films may be used alone or as a multi-layer film in which those films are laminated on each other. Further, various additives may be used in each of those films, and the kind and content thereof are not particularly limited. Of those films, a film formed of polyethylene, polypropylene, polyvinylidene fluoride, or polysulfone is preferably used for the secondary battery to be manufactured by a method of manufacturing the secondary battery. When the non-aqueous electrolyte is the pure polymer electrolyte or the inorganic solid electrolyte, the separator may not be incorporated.

The shape of the secondary battery is not particularly limited, and may be various shapes, such as a coin shape, a cylindrical shape, a rectangular shape, and a laminate shape.

A laminate film or a metal container may be used as an exterior member of the secondary battery. The thickness of the exterior member is generally 0.5 mm or less, preferably 0.3 mm or less. Examples of the shape of the exterior member include a flat shape (thin shape), a rectangular shape, a cylindrical shape, a coin shape, and a button shape.

A multi-layer film comprising a metal layer between resin films may be used as the laminate film. The metal layer is preferably aluminum foil or aluminum alloy foil for weight saving. For example, a polymer material, such as polypropylene, polyethylene, nylon, or polyethylene terephthalate, may be used for the resin film. The laminate film may be sealed through thermal fusion and formed into the shape of the exterior member.

The metal container may be formed of, for example, stainless steel, aluminum, or an aluminum alloy. The aluminum alloy is preferably an alloy containing an element, such as magnesium, zinc, or silicon. When the content of a transition metal, such as iron, copper, nickel, or chromium, in aluminum or the aluminum alloy is set to 1% or less, the long-term reliability and heat dissipation property of the battery under a high-temperature environment can be dramatically improved.

Examples

Now, the present invention is described in more detail by way of the Examples and the Comparative Examples. However, the present invention is not limited to Examples below. "Part(s)" and "%" in the Examples are by mass unless otherwise specified.

Raw material PAN mixture: 10 parts by mass of polyacrylonitrile powder (manufactured by Sigma-Aldrich, average particle diameter: 200 $\mu$m) and 30 parts by mass of sulfur powder (manufactured by Sigma-Aldrich, average particle diameter: 200 $\mu$m) were mixed with a mortar, and the mixture was used as a raw material for a sulfur-modified polyacrylonitrile in each of Production Examples 1 to 4.

[Production Example 1]

A sulfur-modified polyacrylonitrile was produced by a method in conformity with Production Examples of JP 2013-054957 A. Specifically, 20 g of the raw material PAN mixture was loaded in a bottomed cylindrical glass tube having an outer diameter of 45 mm and a length of 120 mm, and a silicone plug comprising a gas introduction tube and a gas discharge tube was then installed in an opening of the glass tube. After the air in the inside of the glass tube was replaced with nitrogen, a lower portion of the glass tube was placed in a crucible-type electric furnace, and heated at 400°C for 1 hour while hydrogen sulfide to be generated was removed by introducing nitrogen from the gas introduction tube. A sulfur vapor is refluxed by being condensed at an upper portion or a lid portion of the glass tube. The resultant intermediate product was placed in a glass tube oven at 260°C. After pressure reduction was performed, the intermediate product was heated for 1 hour at 20 hPa, to thereby remove sulfur therefrom. The resultant sulfur-modified product was pulverized with a ball mill, and was then classified with a sieve. Thus, a sulfur-modified polyacrylonitrile SPAN 1 having an average particle diameter of 10 um was obtained.

[Production Example 2]

The same operations as in Production Example 1 were performed except that the time for removal of sulfur from the intermediate product in Production Example 1 was changed from 1 hour to 24 hours. Thus, a sulfur-modified polyacrylonitrile SPAN 2 was obtained.

[Production Example 3]

The same operations as in Production Example 1 were performed except that the conditions for removal of sulfur from the intermediate product in Production Example 1 were changed from heating for 1 hour at a reduced pressure of 20 hPa to heating for 24 hours at normal pressure under a nitrogen gas stream. Thus, a sulfur-modified polyacrylonitrile SPAN 3 was obtained.

[Production Example 4J

The same operations as in Production Example 1 were performed except that the temperature and time for removal of sulfur from the intermediate product in Production Example 1 were changed from 260°C for 1 hour to 300°C for 3 hours. Thus, a sulfur-modified polyacrylonitrile SPAN 4 was obtained.

[Production Example 5J

The same operations as in Production Example 1 were performed except that the temperature and time for removal of sulfur from the intermediate product in Production Example 1 were changed from 260°C for 1 hour to 300°C for 24 hours. Thus, a sulfur-modified polyacrylonitrile SPAN 5 was obtained.

[Production Example 6J

A center potion of a glass tube made of heat-resistant glass having an outer diameter of 10 mm and an inner diameter of 6 mm was heated to be expanded. Thus, a volumetric pipette-type core tube made of glass comprising an expanded portion having an outer diameter of 30 mm and a length of 50 mm in a center portion thereof and thin tubes each having an outer diameter of 10 mm and a length of 150 mm at both ends thereof was produced.

5 g of the raw material PAN mixture was loaded in the expanded portion of the core tube, and the core tube was arranged in a tubular electric furnace having a heating portion of 70 mm so as to have an inclination of 5°. After the inside of the core tube was replaced with a nitrogen gas, the raw material PAN mixture was heated at 400°C for 1 hour while being rotated at 1 rotation per minute. Thus, an intermediate product was obtained. Thermal insulation was performed by filling glass wool in gaps of both ends of the tubular electric furnace. During the heating, a nitrogen gas was fed at a flow rate of 100 ml/min from a lower end of the core tube so that a hydrogen sulfide gas to be generated was able to be discharged from an upper end of the core tube. In addition, while a portion to be heated of the core tube was set to the entirety of the expanded portion, sulfur having sublimated and adhered to a thin tube portion was refluxed to the expanded portion by being appropriately heated to be melted.

The resultant intermediate product was placed in a glass tube oven at 300°C. After pressure reduction was performed, the intermediate product was heated for 3 hours at 20 hPa, to thereby remove sulfur therefrom. The resultant sulfur-modified product was pulverized with a ball mill, and was then classified with a sieve. Thus, a sulfur-modified polyacrylonitrile SPAN 6 having an average particle diameter of 10 $\mu$m was obtained.

[Production Example 7]

The same operations as in Production Example 6 were performed except that the temperature of removal of sulfur from the intermediate product in Production Example 6 was changed from 300°C to 350°C. Thus, a sulfur-modified polyacrylonitrile SPAN 7 was obtained.

[Production Example 8]

The same operations as in Production Example 6 were performed except that the temperature and time for removal of sulfur from the intermediate product in Production Example 6 were changed from 300°C for 3 hours to 250°C for 1 hour. Thus, a sulfur-modified polyacrylonitrile SPAN 8 was obtained.

[Production Example 9J

The same operations as in Production Example 6 were performed except that the temperature and time for removal of sulfur from the intermediate product in Production Example 6 were changed from 300°C for 3 hours to 250°C for 5 hours. Thus, a sulfur-modified polyacrylonitrile SPAN 9 was obtained.

[Production Example 10]

The sulfur-modified polyacrylonitrile SPAN 6 and the sulfur-modified polyacrylonitrile SPAN 8 were mixed at a mass ratio of 25:75. Thus, a sulfur-modified polyacrylonitrile SPAN 10 was obtained.

[Production Example 11]

The sulfur-modified polyacrylonitrile SPAN 6 and the sulfur-modified polyacrylonitrile SPAN 8 were mixed at a mass ratio of 50:50. Thus, a sulfur-modified polyacrylonitrile SPAN 11 was obtained.

$F_{32}$, $F_{64}$, and the content of sulfur of each of SPAN 1 to SPAN 8 were measured by the following methods, and the values for E1/(E1+E2+E3) and E2/(E1+E2+E3) were calculated. The results are shown in Tables 1 and 2. SPAN 2, SPAN 4 to SPAN 7, and SPAN 9 to SPAN 11 were the sulfur-modified polyacrylonitriles of the present invention, and were hence used as Examples 1 to 8, respectively, and SPAN 1, SPAN 3, and SPAN 8 were used as Comparative Examples 1 to 3, respectively.

[Content of Sulfur]

The content of sulfur was calculated from the analysis results with a CHN analyzer (manufactured by Elementar Analysensysteme GmbH, model: varioMICROcube) capable of analyzing sulfur and oxygen. The temperatures of a combustion tube and a reduction tube were set to 1,150°C and 850°C, respectively, and a tin boat was used as a sample container.

[Thermal Desorption Mass Spectrometry]

Thermal desorption mass spectrometry based on an electron ionization method was performed with a temperature-controlled thermal desorption analyzer (manufactured by ESCO, Ltd, model: TDS 1200). The sampling amount of the sulfur-modified polyacrylonitrile, the measurement temperature range, and the temperature increase rate were set to from 40 ng to 60 ng, from 55°C to 1,000°C, and 60°C/min, respectively. After the temperature reached 1,000°C, the temperature was kept at 1,000°C. Data from the start of the measurement to 5 minutes after the temperature reached 1,000°C was used.

For each of $F_{32}$ and $F_{64}$, the quantity of electricity of a fragment ion is measured in microampere as a unit. In addition, each of $F_{32}$ and $F_{64}$ is represented as a quantity of electricity per mass (mg) of the sample.

FIG. 1 is a chart showing the results obtained by subjecting SPAN 7 (Example 5) to the thermal desorption mass spectrometry based on an electron ionization method.

Table 1

| | | 55°C-270°C (μA/g) | 270°C-570°C (μA/g) | 570°C-1,000°C (μA/g) |
|---|---|---|---|---|
| SPAN 1 | $F_{32}$ | 7.88 | 36.3 | 103 |
| | $F_{64}$ | 22.7 | 66.9 | 115 |
| | $F_{32}+2F_{64}$ | 53.28 | 170.1 | 333 |
| SPAN 2 | $F_{32}$ | 5.41 | 43.8 | 151 |
| | $F_{64}$ | 1.97 | 37.8 | 128 |
| | $F_{32}+2F_{64}$ | 9.35 | 119.4 | 407 |
| SPAN 3 | $F_{32}$ | 17.5 | 35.8 | 92.1 |
| | $F_{64}$ | 43.9 | 72.0 | 89.7 |
| | $F_{32}+2F_{64}$ | 105.3 | 179.8 | 271.5 |
| SPAN 4 | $F_{32}$ | 7.91 | 20.6 | 103 |
| | $F_{64}$ | 3.28 | 17.1 | 86.8 |
| | $F_{32}+2F_{64}$ | 14.47 | 54.8 | 276.6 |
| SPAN 5 | $F_{32}$ | 0.650 | 65.0 | 111 |
| | $F_{64}$ | 0.240 | 56.0 | 94.7 |
| | $F_{32}+2F_{64}$ | 1.13 | 17.7 | 300.4 |
| SPAN 6 | $F_{32}$ | 0.591 | 9.88 | 114 |
| | $F_{64}$ | 0.232 | 8.79 | 94.8 |
| | $F_{32}+2F_{64}$ | 1.055 | 27.46 | 303.6 |
| SPAN 7 | $F_{32}$ | 0.463 | 2.48 | 112 |
| | $F_{64}$ | 0.211 | 3.82 | 109 |
| | $F_{32}+2F_{64}$ | 0.885 | 10.12 | 330 |
| SPAN 8 | $F_{32}$ | 4.55 | 19.9 | 19.1 |
| | $F_{64}$ | 4.47 | 21.2 | 12.2 |
| | $F_{32}+2F_{64}$ | 13.49 | 62.3 | 43.5 |
| SPAN 9 | $F_{32}$ | 3.28 | 38.2 | 86.7 |
| | $F_{64}$ | 4.04 | 76.1 | 85.0 |
| | $F_{32}+2F_{64}$ | 11.37 | 190.4 | 256.7 |
| SPAN 10 | $F_{32}$ | 3.56 | 17.4 | 42.8 |
| | $F_{64}$ | 3.41 | 18.1 | 32.9 |
| | $F_{32}+2F_{64}$ | 10.38 | 53.59 | 109 |

(continued)

| | | 55°C-270°C (µA/g) | 270°C-570°C (µA/g) | 570°C-1,000°C (µA/g) |
|---|---|---|---|---|
| SPAN 11 | $F_{32}$ | 2.57 | 14.9 | 66.5 |
| | $F_{64}$ | 2.35 | 15.0 | 53.5 |
| | $F_{32}+2F_{64}$ | 7.27 | 44.9 | 173.5 |

Table 2

| | | Total content of sulfur (mass%) | E1/(E1+E2+E3) | E2/(E1+E2+E3) |
|---|---|---|---|---|
| SPAN 1 | Comparative Example 1 | 45.0 | 0.096 | 0.306 |
| SPAN 2 | Example 1 | 43.1 | 0.017 | 0.220 |
| SPAN 3 | Comparative Example 2 | 47.8 | 0.189 | 0.323 |
| SPAN 4 | Example 2 | 38.1 | 0.042 | 0.158 |
| SPAN 5 | Example 3 | 37.8 | 0.004 | 0.056 |
| SPAN 6 | Example 4 | 37.9 | 0.003 | 0.083 |
| SPAN 7 | Example 5 | 37.2 | 0.003 | 0.030 |
| SPAN 8 | Comparative Example 3 | 51.1 | 0.113 | 0.522 |
| SPAN 9 | Example 6 | 47.3 | 0.025 | 0.411 |
| SPAN 10 | Example 7 | 48.5 | 0.060 | 0.311 |
| SPAN 11 | Example 8 | 44.5 | 0.032 | 0.199 |

[Production of Electrode containing Sulfur-modified Polyacrylonitrile]

Electrodes of Examples 1 to 8 and Comparative Examples 1 to 3 were produced by the following method through use of the sulfur-modified polyacrylonitriles of Examples 1 to 8 and Comparative Examples 1 to 3, respectively.

92.0 Parts by mass of the sulfur-modified polyacrylonitrile serving as an electrode active material, 3.5 parts by mass of acetylene black (manufactured by Denka Company Limited) and 1.5 parts by mass of a carbon nanotube (manufactured by Showa Denko K.K., product name: VGCF) serving as conductive assistants, 1.5 parts by mass of a styrene-butadiene rubber (aqueous dispersion, manufactured by Zeon Corporation) and 1.5 parts by mass of carboxymethyl cellulose (manufactured by Daicel Fine Chem Ltd.) serving as binders, and 120 parts by mass of water serving as a solvent were mixed with each other with a rotation/revolution mixer to prepare a slurry. The slurry composition was applied onto a current collector formed of stainless-steel foil (thickness: 20 um) by a doctor blade method and dried at 90°C for 3 hours. After that, the electrode was cut into a predetermined size and subjected to vacuum drying at 120°C for 2 hours. Thus, a disc-shaped electrode was produced.

[Production of Positive Electrode 1]

90.0 Parts by mass of Li(Ni$_{1/3}$Co$_{1/3}$Mn$_{1/3}$)O$_2$ (manufactured by Nihon Kagaku Sangyo Co., Ltd., product name: NCM 111, hereinafter referred to as "NCM") serving as a positive electrode active material, 5.0 parts by mass of acetylene black (manufactured by Denka Company Limited) serving as a conductive assistant, and 5.0 parts by mass of polyvinylidene fluoride (manufactured by Kureha Corporation) serving as a binder were mixed and dispersed in 100 parts by mass of N-methylpyrrolidone with a rotation/revolution mixer to prepare a slurry. The slurry composition was applied onto a current collector formed of aluminum foil (thickness: 20 µm) by a doctor blade method and dried at 90°C for 3 hours. After that, the electrode was cut into a predetermined size and subjected to vacuum drying at 120°C for 2 hours. Thus, a disc-shaped positive electrode 1 was produced.

[Production of Negative Electrode 1]

Metal lithium having a thickness of 500 µm was cut into a predetermined size. Thus, a disc-shaped negative electrode 1 was produced.

[Preparation of Non-aqueous Electrolyte]

An electrolyte solution was prepared by dissolving $LiPF_6$ at a concentration of 1.0 mol/L in a mixed solvent consisting of 50 vol% of ethylene carbonate and 50 vol% of diethyl carbonate.

[Assembly of Battery]

Each of the electrodes of Examples 1 to 8 and Comparative Examples 1 to 3 serving as a positive electrode and the negative electrode 1 serving as a negative electrode were held in a case while a glass filter serving as a separator was sandwiched therebetween. After that, the non-aqueous electrolyte prepared in advance was injected into the case, and the case was hermetically sealed. Thus, a non-aqueous electrolyte secondary battery (a coin-shaped battery having a diameter of φ20 mm and a thickness of 3.2 mm) of each of Examples 9 to 16 and Comparative Examples 4 to 6 was produced.
In addition, each of the electrodes of Examples 1 to 8 and Comparative Examples 1 to 3 serving as a negative electrode and the positive electrode 1 serving as a positive electrode were held in a case while a polypropylene fine porous membrane serving as a separator was sandwiched therebetween. After that, the non-aqueous electrolyte prepared in advance was injected into the case, and the case was hermetically sealed. Thus, a non-aqueous electrolyte secondary battery (a coin-shaped battery having a diameter of φ20 mm and a thickness of 3.2 mm) of each of Examples 17 to 24 and Comparative Examples 7 to 9 was produced.

[Evaluation as Positive Electrode Active Material]

The non-aqueous electrolyte secondary batteries of Examples 9 to 16 and Comparative Examples 4 to 6 were each placed in a constant-temperature bath at 30°C, and subjected to 12 cycles of charging and discharging at a charge rate of 0.2C and a discharge rate of 0.2C in which a charge final voltage and a discharge final voltage were set to 3.0 V and 1.0 V, respectively, and measured for a charge-discharge capacity. The battery after the completion of charging at the 11th cycle was stored at 60°C for 2 weeks, and was then discharged. A charge capacity before the storage (a charge capacity at the 11th cycle), a discharge capacity after the storage (a discharge capacity at the 11th cycle), an irreversible capacity (a difference between the charge capacity at the 11th cycle and a charge capacity at the 12th cycle), and a self-discharge capacity (a difference between the charge capacity before the storage and the total of the discharge capacity after the storage and the irreversible capacity) are shown in Table 2. The capacities were each a capacity per mass of the sulfur-modified polyacrylonitrile serving as a positive electrode active material.

Table 3

| | Positive electrode active material | Charge capacit y before storage (mAh/g) | Discharg e capacity after storage (mAh/g) | Irreversibl e capacity (mAh/g) | Self-discharg e capacity (mAh/g) |
|---|---|---|---|---|---|
| Example 9 | Example 1 | 663 | 640 | 22 | 1 |
| Example 10 | Example 2 | 584 | 562 | 20 | 2 |
| Example 11 | Example 3 | 579 | 557 | 22 | 0 |
| Example 12 | Example 4 | 582 | 560 | 21 | 1 |
| Example 13 | Example 5 | 573 | 551 | 21 | 1 |
| Example 14 | Example 6 | 776 | 749 | 24 | 3 |
| Example 15 | Example 7 | 780 | 752 | 26 | 2 |
| Example 16 | Example 8 | 682 | 657 | 23 | 2 |
| Comparativ e Example 4 | Comparativ e Example 1 | 646 | 609 | 32 | 5 |
| Comparativ e Example 5 | Comparativ e Example 2 | 642 | 597 | 36 | 9 |

(continued)

|  | Positive electrode active material | Charge capacity before storage (mAh/g) | Discharge capacity after storage (mAh/g) | Irreversible capacity (mAh/g) | Self-discharge capacity (mAh/g) |
|---|---|---|---|---|---|
| Comparative Example 6 | Comparative Example 3 | 726 | 685 | 32 | 9 |

[Evaluation as Negative Electrode Active Material]

The same operations as in Evaluation as Positive Electrode Active Material were performed on each of the non-aqueous electrolyte secondary batteries of Examples 17 to 24 and Comparative Examples 7 to 9 except that the charge final voltage and the discharge final voltage were changed to 3.2 V and 0.8 V, respectively. The charge capacity before the storage, the discharge capacity after the storage, and the irreversible capacity are shown in Table 3. The capacities were each a capacity per mass of NCM serving as a positive electrode active material.

Table 4

|  | Negative electrode active material | Charge capacity before storage (mAh/g) | Discharge capacity after storage (mAh/g) | Irreversible capacity (mAh/g) | Self-discharge capacity (mAh/g) |
|---|---|---|---|---|---|
| Example 17 | Example 1 | 113 | 101 | 8 | 4 |
| Example 18 | Example 2 | 114 | 102 | 9 | 3 |
| Example 19 | Example 3 | 114 | 103 | 7 | 4 |
| Example 20 | Example 4 | 113 | 103 | 8 | 2 |
| Example 21 | Example 5 | 113 | 102 | 7 | 4 |
| Example 22 | Example 6 | 113 | 100 | 8 | 5 |
| Example 23 | Example 7 | 114 | 102 | 9 | 3 |
| Example 24 | Example 8 | 113 | 100 | 7 | 6 |
| Comparative Example 7 | Comparative Example 1 | 114 | 87 | 12 | 15 |
| Comparative Example 8 | Comparative Example 2 | 113 | 83 | 14 | 16 |
| Comparative Example 9 | Comparative Example 3 | 113 | 89 | 13 | 11 |

The non-aqueous electrolyte secondary battery having been charged is reduced in discharge capacity due to an increase in the self-discharge and irreversible capacity, and particularly, the reduction in discharge capacity is larger at high temperature than at low temperature. This is the reason why the discharge capacity after the storage is lower than the charge capacity before the storage in each of Tables 3 and 4. It is found that a reduction from the charge capacity before the storage to the discharge capacity after the storage is smaller in each of the batteries of Examples 9 to 16 and Examples 17 to 24 using the electrodes of Examples 1 to 8 than in each of the batteries of Comparative Examples 4 to 6 and Comparative Examples 7 to 9, and each of the batteries of Examples 9 to 16 and Examples 17 to 24 using the electrodes of Examples 1 to 8 is excellent in electric power storage characteristics at high temperature.

Claims

1. A sulfur-modified polyacrylonitrile, which has a total content of sulfur of from 30 mass% to 55 mass%, and has a value for the following calculation formula (1) of less than 0.08:
<calculation formula (1)>

$$E1/(E1+E2+E3) \qquad (1)$$

where El, E2, and E3 are each represented by a value for $F_{32}+2F_{64}$, $F_{32}$ and $F_{64}$ represent fragment ion intensities at m/z=32 and m/z=64, which are obtained when the sulfur-modified polyacrylonitrile is subjected to thermal desorption mass spectrometry based on an electron ionization method at a temperature increase rate of 60°C/min in a measurement temperature range of from 55°C to 1,000°C, respectively, and E1 represents a value for $F_{32}+2F_{64}$ in a measurement temperature range of 55°C or more and less than 270°C, E2 represents a value for $F_{32}+2F_{64}$ in a measurement temperature range of 270°C or more and less than 570°C, and E3 represents a value for $F_{32}+2F_{64}$ in a measurement temperature range of 570°C or more and 1,000°C or less.

2. The sulfur-modified polyacrylonitrile according to claim 1, wherein the sulfur-modified polyacrylonitrile has a value for the following calculation formula (2) of less than 0.50:
   <calculation formula (2)>

$$E2/(E1+E2+E3) \qquad (2)$$

where El, E2, and E3 are each represented by a value for $F_{32}+2F_{64}$, $F_{32}$ and $F_{64}$ represent fragment ion intensities at m/z=32 and m/z=64, which are obtained when the sulfur-modified polyacrylonitrile is subjected to the thermal desorption mass spectrometry based on an electron ionization method at a temperature increase rate of 60°C/min in a measurement temperature range of from 55°C to 1,000°C, respectively, and E1 represents a value for $F_{32}+2F_{64}$ in a measurement temperature range of 55°C or more and less than 270°C, E2 represents a value for $F_{32}+2F_{64}$ in a measurement temperature range of 270°C or more and less than 570°C, and E3 represents a value for $F_{32}+2F_{64}$ in a measurement temperature range of 570°C or more and 1,000°C or less.

3. An electrode active material, comprising the sulfur-modified polyacrylonitrile of claim 1 or 2.

4. An electrode for a secondary battery, comprising the electrode active material of claim 3.

5. A non-aqueous electrolyte secondary battery, comprising the electrode for a secondary battery of claim 4 as a positive electrode.

6. A non-aqueous electrolyte secondary battery, comprising the electrode for a secondary battery of claim 4 as a negative electrode.

7. A method of manufacturing an electrode for a non-aqueous electrolyte secondary battery comprising an electrode active material containing a sulfur-modified polyacrylonitrile, the method comprising:

   an analysis step of subjecting a sulfur-modified polyacrylonitrile having a total content of sulfur of from 30 mass% to 55 mass% to thermal desorption mass spectrometry based on an electron ionization method at a temperature increase rate of 60°C/min in a measurement temperature range of from 55°C to 1,000°C; and
   a selection step 1 of selecting, as an electrode active material of an electrode for a non-aqueous electrolyte secondary battery, a sulfur-modified polyacrylonitrile having a value for the following calculation formula (1) of less than 0.08:

   <calculation formula (1)>

$$E1/(E1+E2+E3) \qquad (1)$$

where E1, E2, and E3 are each represented by a value for $F_{32}+2F_{64}$, $F_{32}$ and $F_{64}$ represent fragment ion intensities at m/z=32 and m/z=64, which are obtained when the sulfur-modified polyacrylonitrile is subjected to the thermal desorption mass spectrometry based on an electron ionization method at a temperature increase rate of 60°C/min in a measurement temperature range of from 55°C to 1,000°C, respectively, and E1 represents a value for $F_{32}+2F_{64}$ in a measurement temperature range of 55°C or more and less than 270°C, E2 represents a value for $F_{32}+2F_{64}$ in a measurement temperature range of 270°C or more and less than 570°C, and E3 represents a value for $F_{32}+2F_{64}$ in a measurement temperature range of 570°C or more and 1,000°C or less.

8. A method of manufacturing an electrode for a non-aqueous electrolyte secondary battery, the method comprising:

an analysis step of subjecting a sulfur-modified polyacrylonitrile having a total content of sulfur of from 30 mass% to 55 mass% to thermal desorption mass spectrometry based on an electron ionization method at a temperature increase rate of 60°C/min in a measurement temperature range of from 55°C to 1,000°C;
a selection step 1 of selecting, as an electrode active material of an electrode for a non-aqueous electrolyte secondary battery, sulfur-modified polyacrylonitriles each having a value for the following calculation formula (1) of less than 0.08; and
a selection step 2 of selecting, as the electrode active material of the electrode for a non-aqueous electrolyte secondary battery, a sulfur-modified polyacrylonitrile having a value for the following calculation formula (2) of less than 0.50 from the sulfur-modified polyacrylonitriles having been selected in the selection step 1:

<calculation formula (1)>

$$E1/(E1+E2+E3) \qquad (1)$$

<calculation formula (2)>

$$E2/(E1+E2+E3) \qquad (2)$$

where E1, E2, and E3 are each represented by a value for $F_{32}+2F_{64}$, $F_{32}$ and $F_{64}$ represent fragment ion intensities at m/z=32 and m/z=64, which are obtained when the sulfur-modified polyacrylonitrile is subjected to the thermal desorption mass spectrometry based on an electron ionization method at a temperature increase rate of 60°C/min in a measurement temperature range of from 55°C to 1,000°C, respectively, and E1 represents a value for $F_{32}+2F_{64}$ in a measurement temperature range of 55°C or more and less than 270°C, E2 represents a value for $F_{32}+2F_{64}$ in a measurement temperature range of 270°C or more and less than 570°C, and E3 represents a value for $F_{32}+2F_{64}$ in a measurement temperature range of 570°C or more and 1,000°C or less.

9. A use of the sulfur-modified polyacrylonitrile of claim 1 or 2 as an electrode active material.

[FIG. 1]

**INTERNATIONAL SEARCH REPORT**

| International application No. |
| --- |
| PCT/JP2021/024480 |

### A. CLASSIFICATION OF SUBJECT MATTER
C08F 8/34(2006.01)i; H01M 4/137(2010.01)i; H01M 4/1399(2010.01)i; H01M 4/60(2006.01)i
FI: C08F8/34; H01M4/60; H01M4/137; H01M4/1399
According to International Patent Classification (IPC) or to both national classification and IPC

### B. FIELDS SEARCHED
Minimum documentation searched (classification system followed by classification symbols)
C08F8/34; H01M4/137; H01M4/1399; H01M4/60

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | WO 2010/044437 A1 (NATIONAL INSTITUTE OF ADVANCED INDUSTRIAL SCIENCE AND TECHNOLOGY) 22 April 2010 (2010-04-22) claims, paragraphs [0037], [0038], example 3 | 1-5, 9 |
| Y | | 6 |
| A | | 7-8 |
| Y | JP 2017-218584 A (ADEKA CORPORATION) 14 December 2017 (2017-12-14) paragraph [0051] | 6 |
| A | WO 2011/129103 A1 (TOYOTA INDUSTRIES CORPORATION) 20 October 2011 (2011-10-20) | 1-9 |
| A | WO 2013/001693 A1 (TOYOTA INDUSTRIES CORPORATION) 03 January 2013 (2013-01-03) | 1-9 |

☐ Further documents are listed in the continuation of Box C.  ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23 August 2021 (23.08.2021) | 31 August 2021 (31.08.2021) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

| International application No. |
|---|
| PCT/JP2021/024480 |

| Patent Documents referred in the Report | Publication Date | Patent Family | Publication Date |
|---|---|---|---|
| WO 2010/044437 A1 | 22 Apr. 2010 | US 2011/0200875 A1 claims, paragraph [0057], examples EP 2337126 A1 CN 102160217 A KR 10-2011-0070868 A | |
| JP 2017-218584 A | 14 Dec. 2017 | (Family: none) | |
| WO 2011/129103 A1 | 20 Oct. 2011 | US 2013/0029222 A1 | |
| WO 2013/001693 A1 | 03 Jan. 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010044437 A1
- JP 2014022123 A
- JP 2014096327 A
- WO 2011062019 A1
- JP 2019114454 A
- JP 2013054957 A